# EUROPÄISCHE PATENTSCHRIFT

(11) **EP 3 106 035 B1**
(45) Veröffentlichungstag und Bekanntmachung des Hinweises auf die Patenterteilung: **19.09.2018**
(21) Anmeldenummer: 15172845.8
(22) Anmeldetag: 19.06.2015
(51) Int. Cl.: B66C 3/00, A22C 11/00

(54) **AUFNAHMEKORB FÜR EINE HEBEVORRICHTUNG SOWIE VERFAHREN ZUM BESCHICKEN EINER LEBENSMITTELVERARBEITENDEN MASCHINE**
BASKET FOR A LIFTING DEVICE AND METHOD FOR LOADING A FOOD PROCESSING MACHINE
CORBEILLE DE RÉCEPTION POUR UN DISPOSITIF DE LEVAGE ET PROCÉDÉ DE CHARGEMENT D'UNE MACHINE DE TRAITEMENT DE PRODUITS ALIMENTAIRES

(43) Veröffentlichungstag der Anmeldung: 21.12.2016
(73) Patentinhaber: Albert Handtmann Maschinenfabrik GmbH & Co. KG, 88400 Biberach (DE)
(72) Erfinder: Maile, Bernd, 88422 Oggelshausen (DE)
(74) Vertreter: Grünecker Patent- und Rechtsanwälte PartG mbB

(56) Entgegenhaltungen:
- DE-A1- 19 500 326
- SU-A1- 624 847
- US-A1- 2005 269 364

## Beschreibung

Die Erfindung betrifft einen Aufnahmekorb für eine Hebevorrichtung zum Aufnehmen, Anheben und Entleeren eines Brätwagens gemäß dem Oberbegriff des Anspruchs 1. Die vorliegende Erfindung betrifft weiter ein Verfahren zum Beschicken einer lebensmittelverarbeitenden Maschine gemäß dem Oberbegriff des Anspruchs 14, sowie einen Brätwagen gemäß dem Oberbegriff des Anspruchs 12.

In der Nahrungsmittelindustrie werden zur Beschickung von lebensmittelverarbeitenden Maschinen, beispielsweise Füllmaschinen, insbesondere Vakuumfüllmaschinen oder Kutter, Hebevorrichtungen eingesetzt. Diese Hebevorrichtungen sind üblicherweise als Armhebeeinrichtungen oder aber als Masthebeeinrichtungen realisiert und können an eine Maschine, beispielsweise ein Füllmaschine oder einen Kutter angebaut werden oder aber als eigenständige Einheit ("Stand-Alone-Einheit") ausgeführt werden. Diese Hebeeinrichtungen sind ausgelegt zur Aufnahme von zum Teil standardisierten Behältern, sogenannten Brätwagen. Die Brätwagen sind mit Rollen versehen. Dabei wird der Brätwagen typischerweise derart in die Aufnahmeeinheit der Hebeeinrichtung eingebracht, dass er sicher gegen Herausfallen verriegelt ist, d.h. in einer festen Position gehalten wird und mit der Hebevorrichtung nach oben über den Fülltrichter einer Füllmaschine gebracht wird. Dort wird der Brätwagen dann gekippt und in den Fülltrichter entleert. Anschließend wird der Brätwagen mit der Hebeeinrichtung wieder zurück in die Ausgangsposition gebracht und vom Bediener durch Lösen der Verriegelung an der Hebeeinrichtung wieder entnommen. Bei der Beschickung von Kuttern wird entsprechend die Kutterschüssel beschickt.

Während des Transports der vollen Brätwagen zur Maschine über den zumeist nassen Fussboden nehmen Räder und Unterboden des Wagens verunreinigtes Spritzwasser vom Fußboden auf. Während des Beschickungsvorgangs befindet sich der Brätwagen kopfüber über der Öffnung des Fülltrichters. Dabei kann das auf der Brätwagenunterseite und im Radbereich befindliche Spritzwasser oder Kondenswasser an den Behälteraußenwänden über die Außenwände des Brätwagens herunterlaufen und in den Fülltrichter gelangen und den Inhalt kontaminieren.

Aus der DE 195 00 326 A1 ist bereits eine Hebevorrichtung bekannt mit einer Abdeckvorrichtung in Form eine aufklappbaren Haube, die verhindern soll, dass Verunreinigungen des Brätwagens in den Trichter gelangen. Die Abdeckvorrichtung weist mehrere Klappbleche auf, die am oberen Brätwagenrand ansetzen. Nachteilig ist hier insbesondere die Hygiene des Klappenmechanismus sowie der hohe Aufwand und die hohen Fertigungskosten. Darüber hinaus bestehen zusätzliche Risiken durch die Gefahr des Einklemmens/Quetschens von Körperteilen, z. B. Fingern. Die Abdeckvorrichtung ist darüber hinaus jeweils nur für einen bestimmten Brätwagentyp geeignet.

Aus der US 2005/0269364 A1 ist eine Einrichtung zum Entleeren eines Müllcontainers bekannt, wobei eine Öffnung im unteren Bereich gegen eine Öffnung in einem Trichter abgedichtet werden soll.

Hiervon ausgehend liegt der vorliegenden Erfindung die Aufgabe zugrunde, einen Aufnahmekorb bzw. eine Hebevorrichtung sowie ein entsprechendes Verfahren bereitzustellen, die auf einfache, zuverlässige und kostengünstige Weise eine Kontamination des Lebensmittels während des Beschickungsvorgangs durch das Spritzwasser vom Fußboden verhindert.

Erfindungsgemäß wird diese Aufgabe durch die Merkmale der Ansprüche 1, 12 und 14 gelöst.

Gemäß der vorliegenden Erfindung weist der Aufnahmekorb für eine Hebevorrichtung ein Dichtelement auf, das sich an zumindest eine Außenwand des Brätwagens anlegen kann. Das Dichtelement verhindert, wenn der Brätwagen in einer oberen Position verkippt wird, derart, dass das Lebensmittel in einen Fülltrichter eingefüllt werden kann, dass Spritzwasser vom Bodenbereich oder den Rädern des Brätwagens oder Kondenswasser in den Trichter hinein läuft. Das Dichtelement ist so am Aufnahmekorb angebracht, dass, wenn der Brätwagen in dem Aufnahmekorb aufgenommen und mechanisch verriegelt ist, sich das Dichtelement an zumindest einer Außenwand des Brätwagens dichtend anlegen kann. Dabei drückt das Dichtelement derart an die Außenwand des Brätwagens, dass eine zuverlässige Abdichtung gewährleist ist. Gemäß der vorliegenden Erfindung ist kein Extraschritt zum Abdichten notwendig, sondern das Abdichten ergibt sich automatisch beim Einschieben und Befestigen bzw. Verriegeln des Brätwagens. Somit ist eine ausreichende Abdichtung gegen herablaufendes Spritzwasser stets gewährleistet. Ein entsprechendes Dichtelement am Aufnahmekorb kann einfach und kostengünstig bewerkstelligt werden. Das Dichtelement kann dabei auf einfache Art und Weise an der dem Brätwagen zugewandten Seitenfläche und/oder der oberen und/oder der unteren Fläche des Aufnahmekorbs befestigt werden.

Es ist ganz besonders vorteilhaft, wenn das Dichtelement als Dichtleiste ausgebildet ist. Eine entsprechende längliche Dichtleiste, d.h. Tropfschutzleiste, kann einfach gefertigt und am Aufnahmekorb befestigt werden. Dabei ist die Dichtleiste vorteilhafterweise so ausgebildet, dass sie sich zumindest auf der Einkippseite über die gesamte Breite des Brätwagens erstreckt. Vorteilhafterweise ist die Dichtleiste zumindest teilweise aus flexiblem Material ausgebildet. Das flexible Material bringt den Vorteil mit sich, dass der Brätwagen einen Druck auf das Dichtelement ausüben kann, was die Dichtfunktion verbessert. Auch Form- und Fertigungstoleranzen, sowie Verformungen von Brätwagen können dadurch ausgeglichen werden. Vorteilhafterweise kann das flexible Material des Dichtelements eines aus der Gruppe der Elastomere sein.

Ganz besonders vorteilhaft weist das Dichtelement eine flexible Dichtlippe auf, die auf den Brätwagen drücken kann, um eine besonders gute Dichtwirkung zu erzielen.

Der Aufnahmekorb ist als U-förmige Tragstruktur ausgebildet, wobei das Dichtelement sich zumindest entlang einer der drei Seiten der Tragstruktur erstreckt. Vorzugsweise zumindest entlang der Einkippseite. Die Einkippseite ist die Seite des Aufnahmekorbs, die der Maschine zugewandt ist und bei einer Kippbewegung nach unten gerichtet ist, hier die der offenen Seite der U-förmigen Tragstruktur gegenüberliegende Seite. Es gibt z.B. auch Ausführungen, bei denen die Öffnung des U zur Bedienseite zeigt, dann ist die Einkippseite die zur offenen Seite benachbarte Seite. Ist zumindest entlang der Einkippseite ein Dichtelement, insbesondere eine Dichtleiste vorgesehen, kann wirksam verhindert werden, dass Schmutzwasser von dem Boden bzw. den Rollen des Brätwagens in den Trichter abläuft.

Es ist vorteilhaft, wenn sich das Dichtelement entlang mehrerer Seiten der Tragstruktur erstreckt. Dabei kann das Dichtelement entweder mehrere einzelne Dichtleisten umfassen oder aber auch als durchgehende L- oder U-förmige Dichtleiste ausgebildet sein.

Vorteilhafterweise ist die Dichtleiste derart ausgebildet, dass sich eine Rinne zwischen Aufnahmekorb und Brätwagen bilden kann. Somit kann sich, wenn der Brätwagen zum Entleeren gekippt wird, Spritzwasser in der Rinne sammeln. So kann beispielsweise das Spritzwasser bereits während des Einkippvorgangs aus der Rinne hinter der Maschine auf den Fußboden geleitet werden. Dadurch, dass sich das Dichtelement an dem Aufnahmekorb befindet, wird die Rinnenabdichtung bzw. Rinne im unteren Bereich, d.h. unteren Drittel des Brätwagens realisiert. Wenn dann beispielsweise an der Einkippseite eine entsprechende Rinne durch eine Dichtleiste realisiert ist, liegt dieser Bereich stets außerhalb des Trichters, so dass abgeleitetes Spritzwasser nicht in den Trichter laufen kann.

Dabei kann es vorteilhaft sein, wenn die Rinne vorzugsweise unter einem Winkel zur Längsachse der entsprechenden Seite des Aufnahmekorbs verläuft, d.h. zumindest abschnittsweise. Das heißt, dass beispielsweise in einer Ausgangsstellung des Brätwagens betrachtet, die Dichtleiste unter einem Winkel α zur Horizontalen verläuft. Bei der geneigten Ausführung der Dichtleiste kann das Spritzwasser noch besser aus dem gefährdeten Bereich abgeführt werden.

Es ist auch möglich, dass die Dichtleiste seitliche Dichtelemente aufweist, die die Rinne seitlich abdichten. Dabei kann jeweils die Dichtleiste auf einer Seite des Aufnahmekorbs abgedichtet werden oder aber die jeweiligen Endstücke bei L- oder U-förmigen Dichtleisten. Dann läuft das gesammelte Spritzwasser erst beim Absenken des entleerten Brätwagens, d.h. beim Zurückkippen des Brätwagens aus der Rinne auf den Fußboden.

Vorteilhafterweise ist das Dichtelement austauschbar angebracht. Dies bringt den Vorteil mit sich, dass das Dichtelement einfach zu Reinigungszwecken entnommen werden kann. Es ist jedoch auch möglich, dass verschiedene Leisten für verschiedene Anwendungen vorgesehen sind und einfach entsprechend ausgetauscht werden können. So kann beispielsweise eine einfache Anpassung an verschiedene Brätwagengeometrien erfolgen.

Gemäß der vorliegenden Erfindung umfasst eine Hebevorrichtung zum Aufnehmen, Anheben und Entleeren eines Brätwagens in einer lebensmittelverarbeitenden Maschine einen Antrieb, ein Hubelement, z. B. einen Hubarm oder Hubmast. Die Hebevorrichtung weist weiter einen mit dem Hubelement verbundenen Aufnahmekorb zur Aufnahme eines Brätwagens nach mindestens einem der Ansprüche 1 bis 10 auf.

Eine erfindungsgemäße Füllmaschine zum Abfüllen pastöser Masse weist einen Trichter zum Einfüllen der pastösen Masse auf, ein Förderwerk zum Fördern der pastösen Masse und ein Füllorgan, insbesondere ein Füllrohr. Eine entsprechende Füllmaschine weist die zuvor beschriebene erfindungsgemäße Hebevorrichtung auf.

Um eine ausreichende Dichtung zwischen Brätwagen und Aufnahmekorb zu realisieren, ist es alternativ auch möglich, dass das Dichtelement, z. B. die Dichtleiste, nicht am Aufnahmekorb befestigt ist sondern stattdessen an der Außenwand des Brätwagens, so dass sich das Dichtelement an zumindest einer Seite eines Aufnahmekorbs einer Hebevorrichtung der lebensmittelverarbeitenden Maschine anlegen kann. Das Dichtelement ist ebenso wie bei den vorherigen Ausführungsbeispielen dabei im unteren Drittel des Brätwagens angeordnet. Somit kann ebenfalls eine ausreichende Dichtwirkung auf einfache Art und Weise automatisch erzielt werden, wenn der Brätwagen in den Aufnahmekorb eingeschoben und fixiert bzw. verriegelt wird.

Bei dem erfindungsgemäßen Verfahren zum Beschicken einer lebensmittelverarbeitenden Maschine, insbesondere einer Füllmaschine, sind folgende Schritte vorgesehen:
- Einschieben und Befestigen eines mit pastöser Masse befüllten Brätwagens in einen Aufnahmekorb der Hebevorrichtung, wodurch sich zumindest zwischen einer Außenwand des Brätwagens und einer entsprechend gegenüberliegenden Seite des Aufnahmekorbs eine längliche Dichtstelle bildet. Dabei kann wie zuvor beschrieben ein Dichtelement, insbesondere eine Dichtleiste, entweder an dem Aufnahmekorb oder aber an dem Brätwagen vorgesehen sein.
- Der Brätwagen wird dann angehoben und entleert. Anschließend wird der Brätwagen abgesenkt und entnommen, d.h. entriegelt und weggefahren.

Da sich zwischen Aufnahmekorb und Brätwagen eine Rinne bildet, kann das Spritzwasser vom Boden des Brätwagens in die Rinne laufen, während der Brätwagen zum Entleeren verschwenkt wird. Somit ist sichergestellt, dass dieses Spritzwasser nicht in den Trichter laufen kann. Das Dichtelement ist derart am Aufnahmekorb oder dem Brätwagen angebracht, dass eine ordnungsgemäße Dichtfunktion gewährleistet ist. Vorteilhafterweise erstreckt sich eine Rinne zumindest entlang der gesamten Breite der Brätwagenseite an der Einkippseite.

Wie zuvor beschrieben kann zum Realisieren der Dichtung bzw. der Rinne das Dichtelement entweder am Aufnahmekorb oder am Brätwagen befestigt sein. Die besonderen für das Dichtelement in Zusammenhang mit dem Aufnahmekorb in den Unteransprüchen 2 bis 10 beschriebenen Merkmale treffen in gleicher Weise für die Ausbildung des Dichtelements zu, wenn es an dem Brätwagen befestigt ist. Beide Ausführungsformen ermöglichen, dass es eine Dichtstelle zwischen Aufnahmekorb und Brätwagen im unteren Bereich des Brätwagens gibt, um zu verhindern, dass Spritzwasser beim Kippen des Brätwagens in den Trichter läuft. Das Ausführungsbeispiel, bei dem das Dichtelement am Aufnahmekorb befestigt ist, ist jedoch zu bevorzugen, da dann nur eine Maßnahme am Aufnahmekorb notwendig ist und nicht jeder einzelne Brätwagen entsprechend ausgerüstet werden muss.

Die Rinne erstreckt sich zumindest auf der Einkippseite entlang der gesamten Breite des Brätwagens. Auf den anderen Seiten kann eine entsprechende Rinne auch etwas kürzer ausgebildet sein.

Der Aufnahmekorb bzw. die Hebeeinrichtung weist auch eine Arretiervorrichtung auf, die den Brätwagen so arretiert und befestigt, dass die Seitenfläche des Behälters einen vorbestimmten Abstand von der dem Behälter zugewandten Fläche des Aufnahmekorbs aufweist, sich also in einer vorbestimmten Position befindet. Das Dichtelement weist dann, wenn der Brätwagen nicht eingebaut ist eine Breite auf, die größer ist als dieser Abstand. Das bedeutet, dass im eingebauten Zustand ein Druck auf das Dichtelement ausgeübt wird derart, dass eine ausreichende Dichtwirkung gewährleistet ist.

Gemäß der Erfindung kann das Dichtelement auch als aufblasbares Element ausgebildet sein. Dies ist insbesondere deshalb vorteilhaft, da in unterschiedlichen Betrieben Brätwagen mit unterschiedlicher Geometrie verwendet werden können oder aber Brätwagen starke Gebrauchsspuren aufweisen können, d.h. stark verbogen sein können. Ein aufblasbares Dichtelement kann sich an die Außenkontur des Brätwagens in idealer Art und Weise anpassen und somit eine zuverlässige Abdichtung gewährleisten. Es ist auch möglich, dass das Dichtelement vor Einschub des Brätwagens zunächst nicht vollständig aufgeblasen ist und wenn der Brätwagen vollkommen eingeschoben worden ist, was z.B. über einen Schalter oder eine Verriegelung oder einen Sensor detektiert werden kann, weiter prall aufgeblasen werden kann.

Die vorliegende Erfindung wird nachfolgend unter Bezugnahme folgender Figuren näher erläutert:
- Fig. 1: zeigt grob schematisch eine Ansicht einer Füllmaschine mit Teilschnitt durch den Aufnahmekorb gemäß einem Ausführungsbeispiel der vorliegenden Erfindung.
- Fig. 2: zeigt eine Vorderansicht der in Fig. 1 gezeigten Füllmaschine.
- Fig. 3: zeigt eine Draufsicht auf die in Fig. 1 gezeigte Vorrichtung.
- Fig. 4: zeigt das in Fig. 1 bis 3 gezeigte Ausführungsbeispiel mit einem Dichtelement , das sich nur entlang einer Seite des Aufnahmekorbs erstreckt.
- Fig. 5: zeigt einen Schnitt durch ein weiteres Ausführungsbeispiel der vorliegenden Erfindung.
- Fig. 6: zeigt die Vorderansicht des in fig. 5 gezeigten Ausführungsbeispiels.
- Fig. 7: zeigt eine Draufsicht des in Fig. 5 und 6 gezeigten Ausführungsbeispiels.
- Fig. 8: zeigt eine Draufsicht des in Fig. 5 bis 7 gezeigten Ausführungsbeispiels, wobei sich das Dichtelement nur entlang der Einkippseite erstreckt.
- Fig. 9: zeigt grob schematisch einen Schnitt durch eine weitere Ausführungsform der Erfindung mit geneigtem Dichtelement.
- Fig. 10: zeigt grob schematisch einen Schnitt durch ein weiteres Ausführungsbeispiel der vorliegenden Erfindung.
- Fig. 11: zeigt eine Vorderansicht des in Fig. 10 gezeigten Ausführungsbeispiels.
- Fig. 12: zeigt eine Draufsicht des in Fig. 10 und 11 gezeigten Ausführungsbeispiels.
- Fig. 13: zeigt eine Draufsicht auf das Ausführungsbeispiel, das in Fig. 10 bis 12 gezeigt ist, wobei sich hier jedoch das Dichtelement nur entlang der Einkippseite des Aufnahmekorbs erstreckt.
- Fig. 14: zeigt einen Schnitt durch ein weiteres Ausführungsbeispiel gemäß der vorliegenden Erfindung, bei dem das Dichtelement an den Brätwagen befestigt ist.
- Fig. 15: zeigt eine Vorderansicht des in Fig. 14 gezeigten Ausführungsbeispiels.
- Fig. 16: zeigt eine Aufsicht des in Fig. 14 und 15 gezeigten Ausführungsbeispiels.
- Fig. 17: zeigt eine Aufsicht, die den Ausführungsbeispielen der Fig. 14 bis 16 entspricht, wobei sich das Dichtelement 4 nur entlang der Einkippseite erstreckt.
- Fig. 18: zeigt schematisch in perspektivischer Darstellung eine Dichtleiste mit seitlichen Dichtelementen.
- Fig. 19a: zeigt grob schematisch eine Draufsicht auf einen Aufnahmekorb mit eingeschobenem Brätwagen.
- Fig. 19b: entspricht der Fig. 19a ohne Brätwagen.

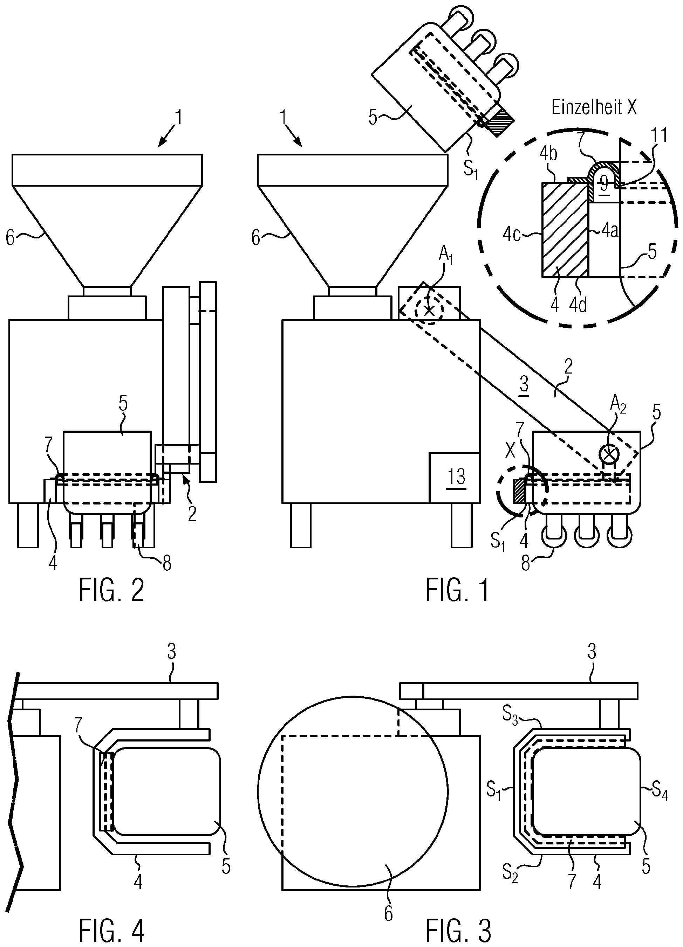

Fig. 1 zeigt ein bevorzugtes Ausführungsbeispiel für eine lebensmittelverarbeitende Maschine, hier eine Füllmaschine, insbesondere Vakuumfüllmaschine zur Wurstherstellung mit einer Hebevorrichtung 2, hier in Form einer Armhebeeinrichtung. Genauso geeignet ist jedoch auch eine Masthebeeinrichtung. Hier ist die Hebevorrichtung 2 mit der Füllmaschine 1 verbunden. Die Hebevorrichtung 2 könnte jedoch auch als eigenständige Einheit ausgeführt werden. Genauso geeignet ist die Vorrichtung auch zum Beschicken beispielsweise eines Kutters.

Die Füllmaschine weist einen Trichter 6 auf, in den pastöse Masse aus einem Brätwagen 5 eingefüllt wird, sowie ein hier nicht dargestelltes unter dem Trichter angeordnetes Förderwerk, das die pastöse Masse in ein Füllorgan, beispielsweise ein Füllrohr transportiert.

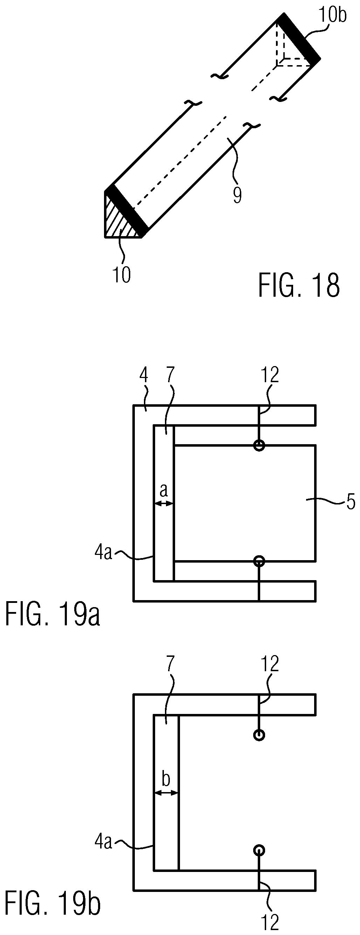

Die pastöse Masse wird in dem Brätwagen 5 angeliefert. Der Brätwagen hat beispielsweise ein Füllvolumen in einem Bereich von 100 bis 1000 Liter. Hier weist der Brätwagen Rollen 8 auf und ist verfahrbar. Der Brätwagen 5 wird von einem Aufnahmekorb 4, hier in Form einer U-förmigen Tragstruktur 4 in der Hebevorrichtung 2 aufgenommen und über eine Arretiervorrichtung 12 (siehe Fig. 19) derart befestigt, dass er sicher gegen Herausfallen verriegelt ist. Dies kann z.B. erfolgen, indem der Behälter in den Aufnahmekorb 4 einrastet. Es kann auch ein Sensor vorgesehen sein, der erkennt, ob der Brätwagen 5 in dem Aufnahmekorb 4 angeordnet und verriegelt ist. Wie aus Fig. 1 und 2 hervorgeht, ist der Aufnahmekorb an dem Hubelement 3, hier dem Hubarm 3 angeordnet. Der Arm 3 ist um eine Achse A1 zum Ausüben einer Hebe- und Senkbewegung schwenkbar angeordnet. Zum Entleeren ist der Behälter 5 um die Achse A2 relativ zum Arm 3 über einen nicht näher erläuterten Schwenkmechanismus verschwenkbar bzw. kippbar. Im Betrieb der Vorrichtung kann auch eine Hebe- und Schwenkbewegung überlagert werden.

Die Hebeeinrichtung weist auch mindestens einen Antrieb 13 für die Hub- und Schwenkbewegung auf. Der Antrieb kann beispielsweise ein hydraulischer Antrieb sein.

Der Aufnahmekorb 4 weist erfindungsgemäß ein Dichtelement 7 auf, das zumindest eine Außenwand des Brätwagens 5 abdichtet. In den Fig. 1 -3 erstreckt sich das Dichtelement 7 entlang der gesamten Seite S1, d.h. der Einkippseite des Aufnahmekorbs und zumindest teilweise entlang der Seiten S2 und S3 des Aufnahmekorbs 4, die an die Einkippseite S1 angrenzen. An der der Einkippseite gegenüberliegenden Seite S4 ist kein Dichtelement angeordnet. Das Dichtelement weist hier eine durchgehende U-förmige Form auf. Das Dichtelement 7 kann sich dichtend an die entsprechende Seitenwand des Brätwagens 5 anlegen. Wie insbesondere aus Fig. 19a,b hervorgeht, wird durch die Arretiervorrichtung 12 der Brätwagen derart befestigt und gehalten, dass die Seitenflächen des Brätwagens einen jeweiligen vorbestimmten Abstand a von der dem Brätwagen zugewandten Fläche des Aufnahmekorbs 4 aufweisen. Wie aus Fig. 19a zu erkennen ist, weist dann auch das zusammengedrückte flexible Dichtelement 7 diese Abmessung a auf. Im nicht eingebauten Zustand des Brätwagens 5 weist das Dichtelement eine Breite b in einer Richtung senkrecht zur dem Behälter zugewandten Fläche 4a betrachtet, die größer ist als der Abstand a. So wird, wenn der Behälter eingeschoben wird, automatisch ein Druck auf das Dichtelement 7, hier die Dichtleiste ausgeübt.

Wenn der Brätwagen in einer oberen Position verkippt wird verhindert das Dichtelement 7, dass Spritzwasser vom Bodenbereich oder den Rädern 8 des Brätwagens 5 in den Trichter 6 hineinläuft und das Lebensmittel kontaminiert. Gemäß der Erfindung ergibt sich somit mit der Aufnahme und der Verriegelung des Brätwagens automatisch eine Abdichtung. Ein entsprechendes Dichtelement 7 kann im Aufnahmekorb 4 einfach und kostengünstig realisiert werden. Das Dichtelement kann dabei auf einfache Art und Weise an der dem Brätwagen 5 zugewandten Seitenfläche 4a und/oder der oberen Seitenfläche 4b und/oder der unteren Seitenfläche 4d befestigt werden. Wie aus Fig. 1 hervorgeht, ist in diesem Fall das Dichtelement 7 an der oberen Fläche 4b sowie der dem Behälter zugewandten Fläche 4a befestigt und weist einen gekrümmten Abschnitt mit einer Dichtlippe 11 auf, wobei die Dichtlippe 11 gegen die Behälterwand 5 drückt. Das Dichtelement weist hier einen U-förmigen Dichtleistenabschnitt auf.

Das Dichtelement 7 ist insbesondere zumindest teilweise aus flexiblem Material ausgebildet. Das heißt, dass zumindest die Dichtlippe 11 aus flexiblem Material ausgebildet ist. Das flexible Material kann beispielsweise eines aus der Gruppeder Elastomere sein.

Das Dichtelement bzw. die Dichtleiste 7 ist derart ausgebildet, dass sich eine Rinne 9 zwischen Aufnahmekorb 4 und Brätwagen 5 bilden kann. Somit kann sich, wenn der Brätwagen zum Entleeren gekippt wird, wie in Fig. 1 dargestellt, das Spritzwasser in der Rinne 9 sammeln. So kann beispielsweise das Spritzwasser bereits während des Einkippvorgangs aus der Rinne 9 auf den Fußboden hinter der Maschine geleitet werden. Das Dichtelement 7 befindet sich am Aufnahmekorb und daher wird eine Abdichtung im unteren Bereich, d.h. im unteren Drittel des Brätwagens realisiert.

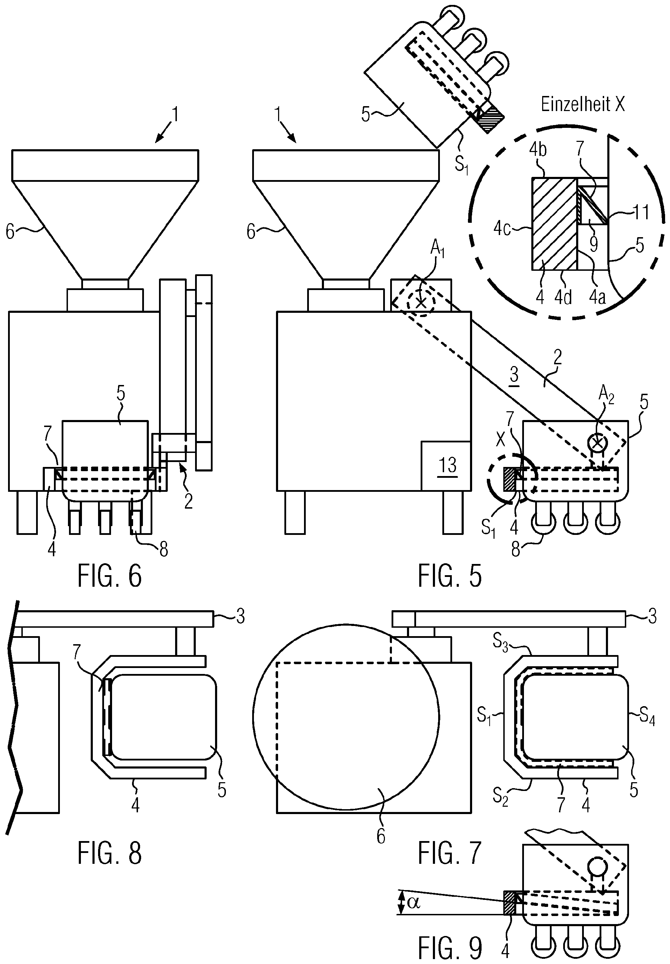

Es kann vorteilhaft sein, wenn die Rinne vorzugsweise zumindest abschnittsweise unter einem Winkel α zur Längsachse der entsprechenden Seite des Aufnahmekorbs verläuft, wie beispielsweise in Fig. 9 dargestellt ist. Das heißt, dass beispielsweise in einer Ausgangsstellung des Brätwagens, d.h. wenn er auf den Boden steht, die Dichtleiste 7 unter einem Winkel α von 1 - 5° zur Horizontalen verläuft. Die Leiste verläuft zumindest abschnittsweise unter einem entsprechenden Winkel, d.h. dass zumindest auf einer Seite S1, S2 oder S3 des Aufnahmekorbs die Rinne geneigt ist oder die Leiste auf einer Seite nur abschnittweise geneigt ist. Die Rinne kann auch von einem mittleren Abschnitt aus in zwei Richtungen schräg angeordnet sein.

Vorzugsweise erstreckt sich das Dichtelement zumindest entlang der Einkippseite S1 des Aufnahmekorbs. Die Einkippseite ist die Seite des Aufnahmekorbs 4, die der Maschine 1 zugewandt ist und bei der Kippbewegung nach unten weist, hier die der offenen Seite S4 der U-förmigen Tragstruktur gegenüberliegende Seite. Ist zumindest entlang der Einkippseite S1 ein Dichtelement, insbesondere eine Dichtleiste vorgesehen, kann wirksam verhindert werden, dass Schmutzwasser vom Boden oder den Rollen des Brätwagens in den Trichter abläuft. Fig. 4 zeigt ein entsprechendes Ausführungsbeispiel, bei dem das Abdichtelement 7 nur auf der Einkippseite S1 angeordnet ist und sich entlang der gesamten Länge der entsprechenden Brätwagenseite erstreckt.

Es ist auch möglich, dass die Dichtleiste seitliche Dichtelemente 10a,b aufweist, wie in Fig. 18 dargestellt ist, die die Rinne 9 seitlich abdichten. Dabei kann jeweils die Dichtleiste auf einer Seite des Aufnahmekorbs 4 abgedichtet werden oder aber die jeweiligen Endstücke bei L- oder U-förmigen Dichtleisten (nicht dargestellt). Bei diesem Ausführungsbeispiel läuft dann das gesammelte Spritzwasser erst beim Absenken des entleerten Brätwagens 5, d.h. beim Zurückkippen und Senken des Brätwagens aus der Rinne 9 auf den Fußboden und nicht schon während des Entleerens, was die Hygiene noch weiter erhöht.

Vorteilhafterweise ist das Dichtelement 7 austauschbar angebracht. Das Dichtelement kann dabei z.B. in eine Schiene, die am Aufnahmekorb 4 befestigt ist, einschoben werden. Dies bringt den Vorteil mit sich, dass das Dichtelement 7 einfach zu Reinigungszwecken entnommen werden kann. Es ist jedoch auch möglich, dass verschiedene Dichtelemente bzw. Dichtleisten 7 für verschiedene Anwendungen vorgesehen sind und einfach ausgetauscht werden können. So kann beispielsweise eine einfache Anpassung an verschiedene Brätwagengeometrien erfolgen. Weitere Einrichtungen zum austauschbaren Befestigen können beispielsweise sein: Magnetverbindung, Schnappverschluss, Steckverbindung, Bajonett-Verschluss, etc.

Die Fig. 5 bis 7 entsprechen im Wesentlichen den Fig. 1 bis 3, wobei jedoch, wie aus Fig. 5 hervorgeht, dass Dichtelement 7 etwas anders geformt ist. Hier weist das Dichtelement 7 bzw. die Dichtleiste im Querschnitt zwei Seiten auf, wobei eine Seite an der dem Brätwagen zugewandten Fläche(n) 4a des Aufnahmekorbs befestigt ist und die andere Seite die Dichtlippe 11 umfasst, die, wie zuvor beschrieben, gegen den Brätwagen 5 drückt. Auch hier ergibt sich eine Rinne zwischen der oder den Flächen des Aufnahmekorbs, die den entsprechenden Seiten des Brätwagens 5 zugewandt sind und den entsprechenden Brätwagenseiten, wie zuvor näher erläutert wurde. Auch bei diesem Ausführungsbeispiel kann das Dichtelement entweder U- oder L-förmig sein oder sich wenigstens entlang der Seite S1 des Aufnahmekorbs bzw. des Brätwagens 5 erstrecken, die der Einkippseite entspricht.

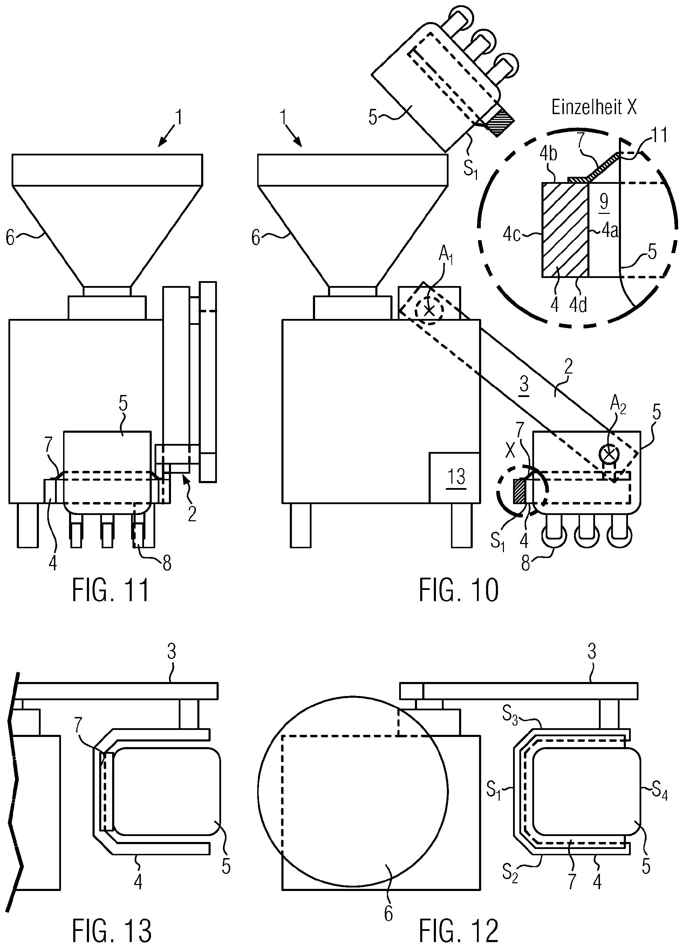

Die Fig. 10 bis 12 entsprechend den jeweiligen Fig. 1 bis 3 bzw. 5 bis 7 und weisen ein Dichtelement 7 bzw. eine Dichtleiste 7 auf, die an der oberen Fläche 4b des Aufnahmekorbs befestigt ist, wobei sich die Dichtlippe nicht wie in Fig. 5 nach unten erstreckt, sondern nach oben in Richtung Brätwagenöffnung betrachtet. Wie aus Fig. 12 und 13 hervorgeht, kann das Dichtelement auch hier entweder I- oder L- oder U-förmig ausgebildet sein oder sich aber zumindest entlang der Einkippseite S1 erstrecken.

Um eine Abdichtung zwischen Brätwagen und Aufnahmekorb zu realisieren wurde in den ersten drei Ausführungsbeispielen ein Dichtelement beschrieben, das an dem Aufnahmekorb 4 befestigt war.

Das Dichtelement 7 kann auch als aufblasbares Element oder zur Abdichtung unterstützend aufblasbar gestaltet sein. Dies ist insbesondere deshalb vorteilhaft, da in unterschiedlichen Betrieben Brätwagen mit unterschiedlicher Geometrie verwendet werden oder aber Brätwagen starke Gebrauchsspuren aufweisen können, d.h. stark verbogen sein können. Ein aufblasbares Dichtelement z.B. in Form eines aufblasbaren Schlauchs, kann sich an die Außenkontur des Brätwagens in idealer Art und Weise anpassen und somit eine zuverlässige Abdichtung gewährleisten. Es ist auch möglich, dass das Dichtelement vor Einschub des Brätwagens zunächst nicht vollständig (d.h. nicht prall) aufgeblasen ist und wenn der Brätwagen vollkommen eingeschoben ist, was z.B. über einen Schalter oder eine Verriegelung oder einen Sensor detektiert werden kann, weiter prall aufgeblasen werden kann. Das aufblasbare Element kann z.B. bis zu einem vorbestimmten Druck aufgeblasen werden und hat dazu vorzugsweise einen Pneumatikanschluss. Das aufblasbare Element wird vorzugsweise durch ein Gas insbesondere Druckluft aufgeblasen, kann aber auch mit einer Flüssigkeit aufgeblasen bzw. gefüllt werden.

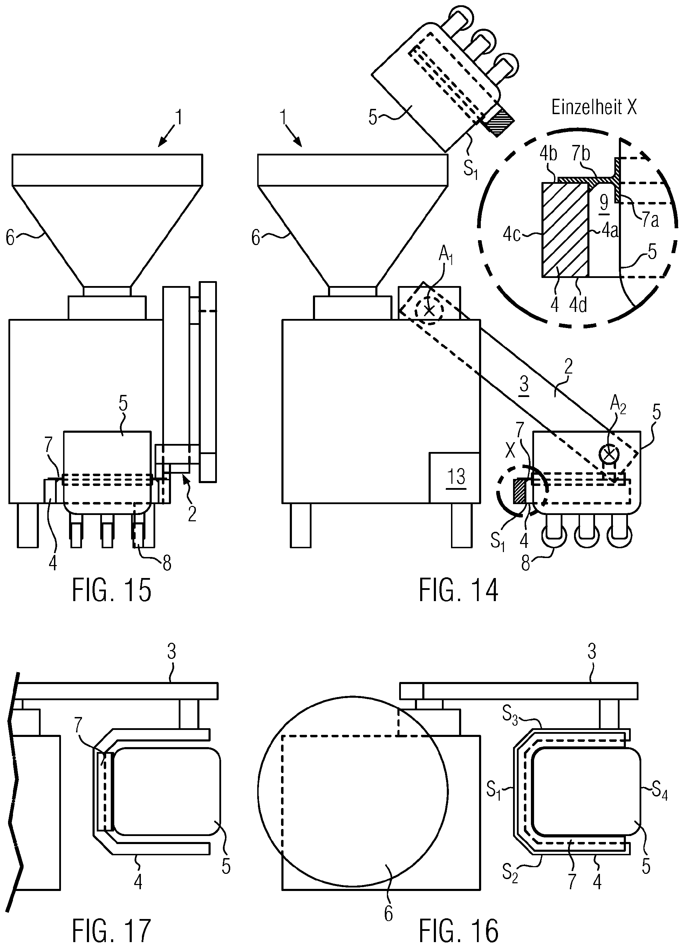

Das Dichtelement kann jedoch auch am Brätwagen 5 befestigt sein, wie insbesondere aus Fig. 14 bis 17 hervorgeht. Wie in Fig. 14 erkennbar ist, weist das Dichtelement 7 einen geraden Abschnitt 7a auf, der an der Behälterwand 5 befestigt ist. Von diesem Abschnitt 7a zweigt der Steg 7b ab, der eine Aussparung aufweist, die den Aufnahmekorb aufnimmt, d.h. hier einen Teil der oberen Fläche 4b und der dem Brätwagen 5 zugewandten Fläche 4a. Das Dichtelement 7 drückt also hier gegen zumindest eine Fläche des Aufnahmekorbs derart, dass eine entsprechende Abdichtung entsteht. Auch hier ergibt sich eine Rinne 9.

Wie auch bei den anderen Ausführungsbeispielen ist dieses Dichtelement bzw. diese Dichtleiste zumindest an der Seite des Behälters 5 angeordnet, die der Einkippseite entspricht. Dabei erstreckt sich das Dichtelement hier bevorzugt über die gesamte Breite des Brätwagens (Fig. 17). Es ist jedoch auch möglich, dass sich die entsprechende Dichtleiste L- oder U-förmig um den Brätwagen 5 erstreckt, oder aber auch den gesamten Brätwagen umgibt. Bei diesem Ausführungsbeispiel ergeben sich die gleichen Vorteile wie im Zusammenhang mit den ersten drei Ausführungsbeispielen beschrieben wurde.

Bei dem erfindungsgemäßen Verfahren zum Beschicken einer lebensmittelverarbeitenden Maschine, hier einer Füllmaschine, sind folgende Schritte vorgesehen:
Zunächst wird der mit pastöser Masse befüllte Brätwagen auf den Rollen 8 zu der Füllmaschine 1 geschoben. Am Boden des Brätwagens und an den Rädern 8 befindet sich Spritzwasser. Der Brätwagen wird in dem Aufnahmekorb 4 der Hebevorrichtung 2 befestigt, beispielsweise durch die Verriegelung bzw. Arretierung 12 und befindet sich somit in einer vorbestimmten Position gehalten. Der Brätwagen kann jetzt nicht mehr aus dem Aufnahmekorb 4 herausfallen. Beim Einschieben bzw. Befestigen des Brätwagens 5 wird das Dichtelement 7, insbesondere die Dichtleiste etwas zusammengedrückt, beispielsweise von einer Abmessung b (siehe Fig. 19a,b) auf eine Abmessung a. Somit kann eine Dichtlippe 11 gegen die entsprechende Brätwagenwand 5 drücken, derart, dass sich eine längliche Dichtstelle bildet. Ist das Dichtelement am Brätwagen 5 befestigt, drückt das Dichtelement gegen den Aufnahmekorb, z.B. eine dem Brätwagen gegenüberliegende Seitenfläche 4a und/oder einer Oberseite 4b und/oder Unterseite 4d des Aufnahmekorbs. Die Dichtstelle erstreckt sich zumindest entlang der gesamten Breite des Brätwagens 5 auf der Einkippseite S1. Der Brätwagen wird dann von der Hubvorrichtung, hier dem Hubarm 3 nach oben gehoben und um die Achse A2 derart verkippt, dass die Öffnung des Brätwagens 5 zum Trichter 6 weist und der Brätwagen 5 entleert werden kann. Da sich zwischen Aufnahmekorb 4 und Brätwagen eine jetzt nach oben geöffnete Rinne 9 bildet, kann das Spritzwasser vom Boden des Brätwagens in die Rinne 9 laufen, wenn der Brätwagen zum Entleeren verschwenkt wird. Somit kann sichergestellt werden, dass dieses Spritzwasser nicht in den Trichter 6 laufen kann.

Ist die Dichtleiste an ihren Enden offen, kann bereits während des Einkippvorgangs das Spritzwasser über die offenen Enden der Leiste bzw. der sich dabei bildenden Rinne ablaufen. Ist diese Rinne bzw. Leiste zumindest abschnittsweise geneigt ausgebildet, wie zuvor im Zusammenhang mit der Fig. 9 erläutert wurde, kann das Spritzwasser insbesondere auch beim Senken des Brätwagens noch besser aus der Rinne ablaufen. Befindet sich der Brätwagen 5 wieder in seiner Ausgangsposition, d.h. dass seine Räder 8 wieder nach unten zum Boden hin gewandt sind, kann das restliche Wasser einfach nach unten ablaufen, da dann die Rinne 9 nach unten geöffnet ist.

Es ist jedoch auch möglich, wie zuvor beschrieben, dass die Dichtleiste 7 an ihren offenen Enden über Verschlusselemente 10a,b (Fig. 18) verschlossen ist. Da in einer angehobenen gekippten Position die Rinne 9 nach oben hin geöffnet ist und nach unten und zu den Seiten durch die Dichtleiste und die Verschlusselemente 10a,b verschlossen ist, kann in dieser Position kein Spritzwasser aus der Rinne herablaufen. Erst wenn der Brätwagen 5 wieder um die Achse A2 zurück in Richtung Ausgangsposition verschwenkt wird, kann über die Rinne 9 das Spritzwasser nach unten auf den Fußboden abgeleitet werden.

Ist der leere Brätwagen wieder abgesenkt, kann dieser entnommen, d.h. entriegelt und weggefahren werden. Somit kann auf einfache Art und Weise verhindert werden, dass Spritzwasser von den Rädern und dem Boden eines Brätwagens in den Trichter läuft.

## Patentansprüche

1. Aufnahmekorb (4) für eine Hebevorrichtung (2) einer lebensmittelverarbeitenden Maschine (1), insbesondere einer Füllmaschine, zur Aufnahme eines Brätwagens (5), der als U-förmige Tragstruktur ausgebildet ist,
**dadurch gekennzeichnet, dass**
der Aufnahmekorb (4) ein daran befestigtes Dichtelement (7) aufweist, das sich an zumindest eine Außenwand des Brätwagens (5) anlegen kann,
wobei das Dichtelement (7) sich zumindest entlang einer der drei Seiten (S₁, S₂, S₃) der Tragstruktur erstreckt, vorzugsweise zumindest entlang der Einkippseite S₁.

2. Aufnahmekorb (4) nach Anspruch 1, **dadurch gekennzeichnet, dass** das Dichtelement (7) als Dichtleiste ausgebildet ist, die insbesondere zumindest teilweise aus flexiblem Material ausgebildet ist.

3. Aufnahmekorb (4) nach Anspruch 1 oder 2, **dadurch gekennzeichnet, dass** das flexible Material des Dichtelements aus der Gruppe der Elastomere ist:

4. Aufnahmekorb (4) nach mindestens einem der Ansprüche 1 bis 3, **dadurch gekennzeichnet, dass** das Dichtelement (7) eine flexible Dichtlippe (11) aufweist.

5. Aufnahmekorb (4) nach mindestens einem der Ansprüche 1 bis 4, **dadurch gekennzeichnet, dass** sich das Dichtelement (7) entlang mehrerer Seiten der Tragstruktur erstreckt, und entweder mehrere Dichtleisten umfasst oder als durchgehende L- oder U-förmige Dichtleiste ausgebildet ist.

6. Aufnahmekorb (4) nach mindestens Anspruch 2, **dadurch gekennzeichnet, dass** die Dichtleiste (7) derart ausgebildet ist, dass sich eine Rinne (9) zwischen Aufnahmekorb (4) und Brätwagen (5) bilden kann.

7. Aufnahmekorb (4) nach mindestens Anspruch 6, **dadurch gekennzeichnet, dass** sich die Rinne (9) zumindest abschnittsweise unter einem Winkel α zur Längsachse der entsprechenden Seite (S₁, S₂, S₃) des Aufnahmekorbs erstreckt.

8. Aufnahmekorb (4) nach Anspruch 6, **dadurch gekennzeichnet, dass** die Dichtleiste (7) Dichtelemente (10a,b) aufweist, die die Rinne (9) seitlich abdichten.

9. Aufnahmekorb (4) nach mindestens einem der Ansprüche 1 bis 8, **dadurch gekennzeichnet, dass** das Dichtelement austauschbar angebracht ist.

10. Hebevorrichtung (2) zum Aufnehmen, Anheben und Entleeren eines Brätwagens (5) in eine lebensmittelverarbeitende Maschine (1) insbesondere Füllmaschine, mit einem Antrieb (12), einem Hubelement (3) und einem mit dem Hubelement (3) verbundenen Aufnahmekorb (4) zur Aufnahme eines Brätwagens (5) nach mindestens einem der Ansprüche 1 bis 9 .

11. Füllmaschine (1) zum Abfüllen pastöser Masse mit einem Trichter (6) zum Einfüllen der pastösen Masse, einem Förderwerk zum Fördern der pastösen Masse in ein Füllorgan, insbesondere Füllrohr und mit einer Hebevorrichtung (12) nach Anspruch 10.

12. Brätwagen (5) zum Beschicken einer lebensmittelverarbeitenden Maschine mit einer Öffnung an der Oberseite, über die der Brätwagen entleerbar ist, insbesondere Füllmaschine (1), **dadurch gekennzeichnet, dass** der Brätwagen (5) an zumindest einer Außenwand ein Dichtelement (7) aufweist, das sich an zumindest einer Seite eines Aufnahmekorbs (4) einer Hebevorrichtung der lebensmittelverarbeitenden Maschine (1) anlegen kann.

13. Brätwagen (5) nach Anspruch 12, **dadurch gekennzeichnet, dass** das Dichtelement (7) im unteren Drittel des Brätwagens (5) angeordnet ist.

14. Verfahren zum Beschicken einer lebensmittelverarbeitenden Maschine, insbesondere einer Füllmaschine (1), mit einer Hebevorrichtung nach Anspruch 10 mit folgenden Schritten:
- Einschieben und Befestigen eines mit pastöser Masse gefüllten Brätwagens (5) in einen Aufnahmekorb (4) der Hebevorrichtung (2), der als U-förmige Tragstruktur ausgebildet ist, wodurch sich zumindest zwischen einer Außenwand des Brätwagens (5) und einer entsprechend gegenüberliegenden Seite des Aufnahmekorbs (4) eine längliche Dichtstelle bildet,
- Anheben und Entleeren des Brätwagens (5) in die lebensmittelverarbeitende Maschine (1), insbesondere Füllmaschine, und
- Absenken und Entnehmen des Brätwagens (5).

15. Verfahren nach Anspruch 14, **dadurch gekennzeichnet, dass** sich zwischen Aufnahmekorb (4) und Brätwagen (5) eine Rinne (9) bildet, in die Spritzwasser vom Boden des Brätwagens (5) läuft, während dieser zum Entleeren verschwenkt wird.

16. Aufnahmekorb (4) nach mindestens Anspruch 6, **dadurch gekennzeichnet, dass** sich die Rinne (9) entlang der gesamten oder einem Teil der Breite einer Brätwagenseite (5) erstreckt.

17. Aufnahmekorb (4) nach mindestens einem der Ansprüche 1-9 oder 16, **dadurch gekennzeichnet, dass** eine Arretiereinrichtung (12) vorgesehen ist, die den Brätwagen (5) so arretiert und befestigt, dass die Seitenfläche des Brätwagens einen vorbestimmten Abstand (a) von der dem Behälter zugewandten Fläche (4a) des Aufnahmekorbs (4) aufweist, und das Dichtelement (7), wenn der Brätwagen (5) nicht eingebaut ist, eine Breite (b) aufweist, die größer ist als der Abstand (a).

18. Aufnahmekorb (4) nach mindestens einem der Ansprüche 1-9, 16 oder 17, **dadurch gekennzeichnet, dass** das Dichtelement (7) als aufblasbares Element ausgebildet ist.

## Claims

1. Receiving basket (4) for a lifting device (2) of a food processing machine (1), in particular of a filling machine, to receive a meat trolley (5) formed as a U-shaped support structure,
**characterized in that**
the receiving basket (4) has a sealing element (7) fixed thereon that can lay itself onto at least one external wall of the meat trolley (5),
whereby the sealing element (7) extends at least along one of the three sides (S1, S2, S3) of the support structure, preferably at least along the tilting side S1.

2. Receiving basket (4) according to Claim 1, **characterized in that** the sealing element (7) is formed as a sealing strip that is in particular formed at least in part of a flexible material.

3. Receiving basket (4) according to Claim 1 or 2, **characterized in that** the flexible material of the sealing element is from the group of elastomers.

4. Receiving basket (4) according to at least one of the Claims 1 to 3, **characterized in that** the sealing element (7) has a flexible sealing lip (11).

5. Receiving basket (4) according to at least one of the Claims 1 to 4, **characterized in that** the sealing element (7) extends along several sides of the support structure and either comprises several sealing strips or is formed as a continuous L- or U-shaped sealing strip.

6. Receiving basket (4) according to at least Claim 2, **characterized in that** the sealing strip (7) is formed in a way that a gutter (9) can be formed between the receiving basket (4) and the meat trolley (5).

7. Receiving basket (4) according to at least Claim 6, **characterized in that** the gutter (9) extends at least in sections at an angle α in relation to the longitudinal axis of the respective side (S₁, S₂, S₃) of the receiving basket.

8. Receiving basket (4) according to Claim 6, **characterized in that** the sealing strip (7) has sealing elements (10 a, b) that seal the gutter (9) laterally.

9. Receiving basket (4) according to at least one of the Claims 1 to 8, **characterized in that** the sealing element is installed in a replaceable way.

10. Lifting device (2) for receiving, lifting and emptying of a meat trolley (5) into a food processing machine (1), in particular a filling machine, with a drive (12), a lifting element (3) and a receiving basket (4) that is connected to the lifting element (3) for receiving a meat trolley (5) according to at least one of the Claims 1 to 9.

11. Filling machine (1) for filling of pasty substance with a funnel (6) to fill the pasty substance, a conveyor system to convey the pasty substance into a filling organ, in particular a filling pipe, and with a lifting lifting device (12) according to Claim 10.

12. Meat trolley (5) for feeding a food processing machine, in particular a filling machine (1), having an aperture at the top, via which the meat trolly may be emptied **characterized in that** the meat trolley (5) has a sealing element (7) on at least one external wall, which can lay itself onto at least one side of a receiving basket (4) of a lifting device of the food processing machine (1).

13. Meat trolley (5) according to Claim 12, **characterized in that** the sealing element (7) is disposed in the lower third of the meat trolley (5).

14. Method for feeding a food processing machine, in particular a filling machine (1), with a lifting device according to Claim 10 with the following steps:
- inserting and fastening of a meat trolley (5) filled with pasty substance in a receiving basket (4) of the lifting device (2) said receiving basked being formed as a U-shaped support structure, whereby a longish sealing point is formed at least between an external wall of the meat trolley (5) and a respective opposite side of the receiving basket (4),
- lifting and emptying of the meat trolley (5) into the food processing machine (1), in particular the filling machine, and
- lowering and removal of the meat trolley (5).

15. Method according to Claim 14, **characterized in that** a gutter (9) is formed between the receiving basket (4) and the meat trolley (5) into which spray water flows from the floor of the meat trolley (5) while the latter is swiveled for emptying.

16. Receiving basket (4) according to at least Claim 6, **characterized in that** the gutter (9) extends along the overall width of a meat trolley side (5).

17. Receiving basket (4) according to at least one of the Claims 1-10 or 17, **characterized in that** a latching device (12) is to be provided that locks and fastens the meat trolley (5) in a way that the side surface of the meat trolley has a predetermined distance (a) from the surface (4a) of the receiving basket (4) that faces the container, and that the sealing element (7) has a width (b) that is larger than the distance (a) when the meat trolley (5) is not installed.

18. Receiving basket (4) according to at least one of Claims 1 - 9, 16 or 17, **characterized in that** the sealing element (7) is formed as an inflatable element.

## Revendications

1. Berceau de réception (4) pour un dispositif de levage (2) d'une machine de transformation de produits alimentaires (1), notamment une machine de remplissage, destiné à recevoir un chariot à chair à saucisse (5) et réalisé sous la forme d'une structure porteuse en forme de U,
**caractérisé**
**en ce que** le berceau de réception (4) comprend un élément d'étanchéité (7), qui y est fixé et peut s'appliquer contre au moins une paroi extérieure du chariot à chair à saucisse (5),
l'élément d'étanchéité (7) s'étendant au moins le long d'un des trois côtés (S₁, S₂, S₃) de la structure porteuse, de préférence au moins le long du côté du basculement de versement (S₁).

2. Berceau de réception (4) selon la revendication 1, **caractérisé en ce que** l'élément d'étanchéité (7) est réalisé en tant que baguette d'étanchéité, qui est notamment réalisée, au moins en partie, en un matériau flexible.

3. Berceau de réception (4) selon la revendication 1 ou la revendication 2, **caractérisé en ce que** le matériau flexible de l'élément d'étanchéité fait partie du groupe des élastomères.

4. Berceau de réception (4) selon l'une au moins des revendications 1 à 3, **caractérisé en ce que** l'élément d'étanchéité (7) comporte une lèvre d'étanchéité flexible (11).

5. Berceau de réception (4) selon l'une au moins des revendications 1 à 4, **caractérisé en ce que** l'élément d'étanchéité (7) s'étend le long de plusieurs côtés de la structure porteuse, et, soit comprend plusieurs baguettes d'étanchéité, soit est réalisé sous la forme d'une baguette en L ou en U continue.

6. Berceau de réception (4) selon au moins la revendication 2, **caractérisé en ce que** la baguette d'étanchéité (7) est d'une configuration permettant la formation d'une goulotte (9) entre le berceau de réception (4) et le chariot à chair à saucisse (5).

7. Berceau de réception (4) selon au moins la revendication 6, **caractérisé en ce que** la goulotte (9) s'étend, au moins par secteurs, sous un angle α par rapport à l'axe longitudinal du côté correspondant (S₁, S₂, S₃) du berceau de réception.

8. Berceau de réception (4) selon la revendication 6, **caractérisé en ce que** la baguette d'étanchéité (7) présente des éléments d'étanchéité (10a, b), qui assurent l'étanchéité latérale de la goulotte (9).

9. Berceau de réception (4) selon l'une au moins des revendications 1 à 8, **caractérisé en ce que** l'élément d'étanchéité est rapporté de manière interchangeable.

10. Dispositif de levage (2) destiné à accueillir, soulever et vider un chariot à chair à saucisse (5) dans une machine de traitement de produits alimentaires (1), notamment une machine de remplissage, comprenant un entraînement (12), un élément de levage (3) et un berceau de réception (4), qui est relié à l'élément de levage (3), et est destiné à recevoir un chariot à chair à saucisse (5) selon l'une au moins des revendications 1 à 9.

11. Machine de remplissage (1) pour assurer le conditionnement par remplissage d'une masse pâteuse, comprenant une trémie (6) pour l'introduction de la masse pâteuse, un groupe de transport pour transporter la masse pâteuse dans un organe de remplissage, notamment un tube de remplissage, et un dispositif de levage (2) selon la revendication 10.

12. Chariot à chair à saucisse (5) pour alimenter une machine de traitement de produits alimentaires comprenant une ouverture sur le côté supérieur, par l'intermédiaire de laquelle le chariot à chair à saucisse peut être vidé, notamment une machine de remplissage (1), **caractérisé en ce que** le chariot à chair à saucisse (5) comporte, sur au moins un côté extérieur, un élément d'étanchéité (7), qui peut venir s'appliquer contre au moins un côté d'un berceau de réception (4) d'un dispositif de levage de la machine de traitement de produits alimentaires (1).

13. Chariot à chair à saucisse (5) selon la revendication 12, **caractérisé en ce que** l'élément d'étanchéité (7) est agencé dans le tiers inférieur du chariot à chair à saucisse (5).

14. Procédé pour alimenter une machine de traitement de produits alimentaires, notamment une machine de remplissage (1), avec un dispositif de levage selon la revendication 10, le procédé comprenant les étapes suivantes :
- l'insertion et la fixation d'un chariot à chair à saucisse (5) rempli d'une masse pâteuse, dans un berceau de réception (4) du dispositif de levage (2), qui est réalisé sous la forme d'une structure porteuse en forme de U, en conduisant ainsi à la formation d'une zone d'étanchéité longitudinale au moins entre une paroi extérieure du chariot à chair à saucisse (5) et un côté opposé correspondant du berceau de réception (4),
- le soulèvement et le vidage du chariot à chair à saucisse (5) dans la machine de traitement de produits alimentaires (1), notamment la machine de remplissage, et
- l'abaissement et le retrait du chariot à chair à saucisse (5).

15. Procédé selon la revendication 14, **caractérisé en ce qu'**entre le berceau de réception (4) et le chariot à chair à saucisse (5) se forme une goulotte (9) dans laquelle s'écoule de l'eau de projections du fond du chariot à chair à saucisse (5), pendant que ce dernier est basculé pour son vidage.

16. Berceau de réception (4) selon au moins la revendication 6, **caractérisé en ce que** la goulotte (9) s'étend le long de la totalité ou d'une partie de la largeur d'un côté du chariot à chair à saucisse (5).

17. Berceau de réception (4) selon l'une au moins des revendications 1 à 9 ou la revendication 16, **caractérisé en ce qu'**il est prévu un dispositif d'arrêt (12), qui arrête et fixe le chariot à chair à saucisse (5) de manière telle, que la surface latérale du chariot à chair à saucisse se situe à une distance (a) prédéterminée de la surface (4a) du berceau de réception (4), qui est dirigée vers le récipient, et l'élément d'étanchéité (7) présente, lorsque le chariot à chair à saucisse (5) n'est pas mis en place, une largeur (b) supérieure à ladite distance (a).

18. Berceau de réception (4) selon l'une au moins des revendications 1 à 9, 16 ou la revendication 17, **caractérisé en ce que** l'élément d'étanchéité (7) est réalisé sous forme d'élément gonflable.
